# EUROPÄISCHE PATENTANMELDUNG

(11) **EP 1 342 998 A2**
(43) Veröffentlichungstag der Anmeldung: **10.09.2003**
(21) Anmeldenummer: 03005083.5
(22) Anmeldetag: 07.03.2003
(51) Int. Cl.: G01M 3/20

(54) **Verfahren und Anordnung zur Erkennung von Leckagen an einem gasgefüllten System**

(30) Priorität: 08.03.2002 DE 10210120
(71) Anmelder: UST Umweltsensortechnik GmbH, 98716 Geschwenda (DE)
(72) Erfinder: Kiesewetter, Olaf, Dr., 98716 Geschwenda (DE); Seyring, Ralf, 98716 Geschwenda (DE)
(74) Vertreter: Liedtke, Klaus, Dr.

(57) **Zusammenfassung**

2.1 Der Erfindung liegt die Aufgabe zugrunde, ein Verfahren und ein Anordnung anzugeben, die es gestatten, auch kleine Leckagen an gasgefüllten Behältern auch in solchen Fällen zu erkennen, bei denen die Konzentration des austretenden Gases sich nur wenig von der Konzentration des den Behälter umgebenden Mediums unterscheidet.
2.2 Erfindungsgemäß gelingt die Lösung der Aufgabe dadurch, dass in dem System ein hygroskopischer Stoff eingebracht wird, der nach Auftreten einer Leckage durch eindringende Feuchtigkeit seine elektrische Leitfähig stark erhöht und ein elektrisch auswertbares Signal abgibt auf Grund dessen ein selektives Markierungsgas in das System gegeben wird, das an der Leckstelle detektierbar ist und
   dass sich in dem gasgefüllten System ein Trockenbehälter befindet, das ein hygroskopisches Trockenmittel enthält, welches durch Feuchtigkeit seine elektrische Leitfähig stark erhöht und der Trockenbehälter mit elektrischen Anschlußleitungen verbunden ist und außerhalb des gasgefüllten Systems mindestens ein Gassensor zur Ermittlung der Leckstelle angebracht ist
2.3 Die Erfindung betrifft ein Verfahren und eine Anordnung zur Erkennung und/oder Ortung von Leckagen an einem gasgefüllten System, wobei Leckstellen mit einem externen Lecksuchgerät erkannt werden.

## Beschreibung

Die Erfindung betrifft ein Verfahren und eine Anordnung zur Erkennung und/oder Ortung von Leckagen an einem gasgefüllten System, wobei Leckstellen mit einem externen Lecksuchgerät erkannt werden.

An Gasleitungen, Druckbehältern und technischen Anlagen in denen Gase aufbewahrt werden müssen, beispielsweise in Kühlanlagen, ist es vielfach erforderlich, die Dichtigkeit der Behältnisse zu überwachen. Dies ist insbesondere dann der Fall, wenn die enthaltenen Stoffe brennbar, giftig, teuer oder umweltschädlich sind.

Im Stand der Technik sind verschiedene Verfahren und Anordnungen bekannt, mit denen eine Lecksuche möglich ist. Die hierzu verwendeten Geräte reagieren für das jeweilige Medium sensitiv, einige Geräte auch selektiv.

Um eine schnelle und empfindliche Detektion des Ortes der Leckstellen zu gewährleisten, darf sich das zu überwachende Medium im Umfeld seines Behälters nur in geringen Konzentrationen befinden und muss sich sehr schnell verflüchtigen.

Bei den meisten Applikationen können diese Bedingungen nicht ausreichend erfüllt werden. So kann bei FCKWs aufgrund der niedrigen Dampfdrücke und der großen molaren Massen eine Anreicherung im Leckbereich erfolgen, die die Suche erschwert oder sogar unmöglich macht.
Für die Detektion von schweren Kohlenwasserstoffen bestehen ähnliche Probleme.

Bei Stoffen, die in verhältnismäßig hohen Konzentrationen in der Umgebung des zu überwachenden Systems vorhanden sind, wird die Überwachung noch erschwert, da kein Konzentrationsgefälle vorhanden ist, um kleine Leckagen zu erkennen. Beispielsweise ist die Überwachung von Leckagen an CO₂-Gefäßen sehr schwierig, da die Konzentration von CO₂ je nach Umgebungsbedingungen grundsätzlich mehr als 350 ppm beträgt. Da der Einsatz von CO₂ als umweltfreundliches Medium für Kälteanlagen angestrebt wird, besteht für die Überwachung solcher Anlagen ein großer Bedarf.

Der Erfindung liegt die Aufgabe zugrunde, ein Verfahren und ein Anordnung anzugeben, die es gestatten, auch kleine Leckagen an gasgefüllten Behältern auch in solchen Fällen zu erkennen, bei denen die Konzentration des austretenden Gases sich nur wenig von der Konzentration des den Behälter umgebenden Mediums unterscheidet.

Die Aufgabe wird erfindungsgemäß mit einem Verfahren, welches die im Anspruch 1 angegebenen Merkmale aufweist, und mit einer Anordnung, welche die im Anspruch 6 angegebenen Merkmale aufweist, gelöst.

Vorteilhafte Ausgestaltungen sind in den Unteransprüchen angegeben.

Bei Auftreten von Feuchtigkeit wird das System aktiviert, indem durch eindringende oder vorhandenen Restfeuchte in dem zu überwachendem System an einem dort untergebrachten Material eine anfängliche nicht vorhandene Leitfähigkeit erzeugt wird, die zu einem auswertbaren Signal führt und durch Anlegen einer Spannung zu einem Elektrolysestrom führt, der die Zersetzung des Materials bewirkt und ein Markierungsgas erzeugt.

Die Verwendung eines speziellen Markierungsgases mit kleiner Molekülgröße und geringer Masse gewährleistet, dass dieses sich bei Auftreten einer Leckage nicht in der Umgebung anreichert und ermöglicht es, in einfacher Weise und ohne größere Aufwendungen, Leckstellen sicher zu ermitteln. Das Gas kann mit einfachen Mitteln in der Anlage erzeugt oder in diese injiziert werden.

Vorteilhaft ist dabei, dass sowohl das Austreten unerwünschter oder gefährlicher Gase aus dem zu überwachenden System in die Umwelt erkannt werden kann, als Gase aus dem zu überwachenden System in die Umwelt erkannt werden kann, als auch die Funktionsfähigkeit einer Anlage zu überwachen, die durch auftretende Undichtigkeiten beeinträchtigt wird. Hierzu wird das dabei auftretende Konzentrationsgefälle infolge der Rückströmung äußerer Stoffe ausgewertet.

Die Erfindung wird im Folgenden anhand eines Ausführungsbeispieles näher erläutert. Im Beispiel ist die Anwendung in einer Kühlanlage dargestellt.

In der zugehörigen Zeichnung zeigen:
- Figur 1: eine schematische Darstellung der Gesamtanlage,
- Figur 2: einen Längsschnitt durch einen Trockenbehälter mit Überwachung durch einen hygroskopischen Stoff,
- und Figur 3: eine Überwachungsanordnung mit zusätzlichem Markierungsgas.

In Kühlanlagen sind die Kühlmedien üblicherweise in großer Menge vorhanden sind und werden im System umgewälzt. Leckagen können deshalb nicht sofort erkannt werden. Häufig führen Restfeuchtigkeit im System oder von außen eindringende Feuchtigkeit zu Korrosion und verstärken bestehende ungefährliche Undichtigkeiten, so dass die ordnungsgemäße Funktion gestört wird. Deshalb werden diese Anlagen üblicherweise mit Trockenmitteln versehen, die zwar die Korrosionswirkung einschränken, Leckagen aber nicht erkennen und die dadurch verursachten Funktionsstörungen auch nicht verhindern können.

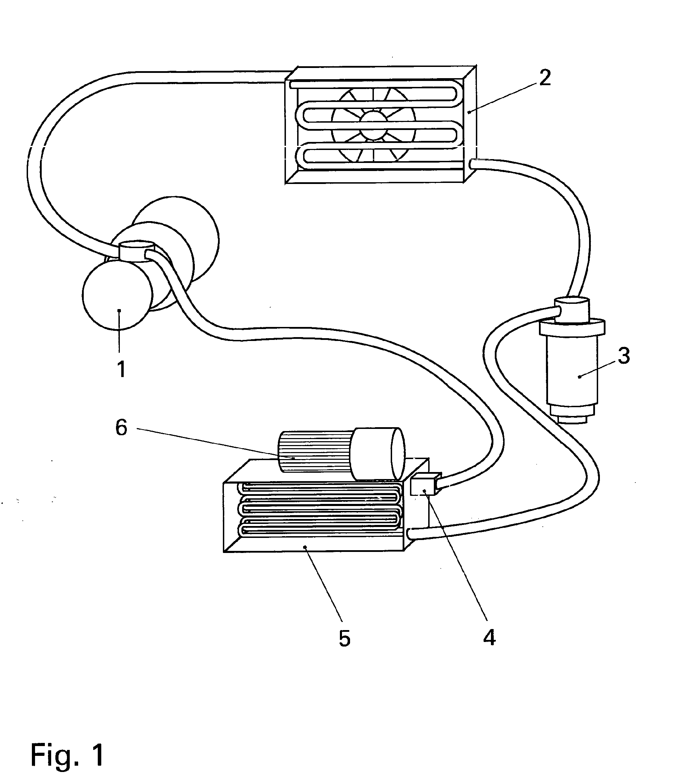

Die in **Figur 1** gezeigte Gesamtanlage enthält einen Kompressor 1 und einen luftgekühlten Kondensator 2, in dem die abgeführte Wärme anfällt. Vom Kondensator 2 gelangt das flüssige Kältemittel zum Trockenbehälter 3 und von dort über das Expansionsventil 4 in den Verdampfer 5, der mit einem Gebläse 6 gekoppelt ist.

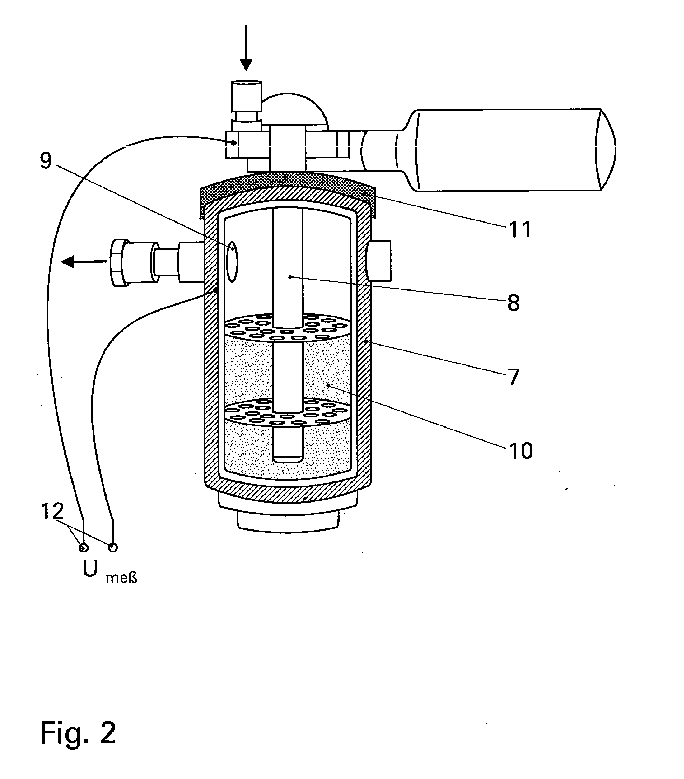

In Figur 2 ist der Trockenbehälter 3 im Schnitt dargestellt. Er verfügt über ein elektrisch leitendes Trocknergehäuse 7, in das das Kältemittel über das Einströmrohr 8 gelangt und durch die Ausströmöffnung 9 wieder austritt. Dabei strömt es durch das Trockenmittel 10. Das Trockenmittel 10 enthält einen hygroskopischen Stoff, der beim Auftreten einer Leckage durch die eindringende Feuchtigkeit und das damit verbundene Konzentrationsgefälle der Feuchtigkeit zwischen dem Inneren und Äußeren des geschlossenen Systems leitfähig wird. Das Einströmrohr 8 ist durch das Isolierstück 11 gegenüber dem Trocknergehäuse 7 elektrische isoliert. Am Einströmrohr 8 und am Trocknergehäuse 7 sind elektrische Anschlussleitungen 12 angebracht. Damit kann durch Anlegen einer elektrischen Spannung ein Signal abgenommen werden, das das Vorhandensein einer Leckstelle anzeigt, indem sich die Leitfähigkeit ändert. Es ist auch möglich, durch unterschiedliche Metallelektroden anzuordnen, die bei Eintritt von Feuchtigkeit ein galvanisches Element bilden und eine Spannung erzeugen, so dass ohne das Anlegen einer äußeren Spannung die Elektrolyse ausgelöst werden kann und das Markierungsgas abgeschieden wird. Beispielsweise können hierzu Elektroden aus Kupfer und aus Zink verwendet werden.

Das Trockenmittel 10 besteht aus einem Material, das durch einen Elektrolysestrom zersetzt wird und ein leichtes und selektives Gas ausscheidet. Dieses Gas kann sich im geschlossenem System gut verteilen und tritt an der Leckstelle aus, wo es detektiert werden kann. Damit kann auch der Ort des Leckes ermittelt werden.

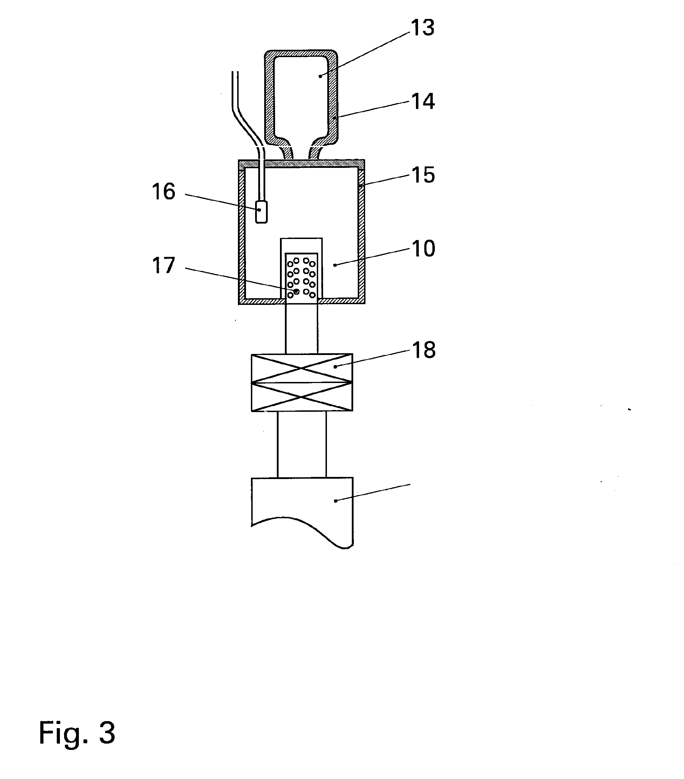

**Figur 3** erläutert eine Ausführung, bei der am Kühlanlagensystem eine zusätzliche Überwachungseinheit angeordnet ist, mit der beim Auftreten einer Leckstelle ein Markierungsgas 13 in das Kühlanlagensystem geleitet wird. Die Überwachungseinheit ist an einer Adapterstelle 18 mit dem Kühlanlagensystem verbunden. Sie besteht aus einem Trockenmittelgehäuse 15 in dem das Trockenmittel 10 in Form einer Patrone angeordnet ist. Das Trockenmittel 10 ist mit dem Feuchtefühler 16 und der Gegenelektrode 17 elektrisch kontaktiert. Durch die als Rohr ausgebildete Gegenelektrode 17 gelangt das Kühlmittel in das Trockenmittelgehäuse 15 mit dem dort eingebrachten Trockenmittel 10. Beim Vorhandensein von Feuchtigkeit sondert das Trockenmittel 10 wie oben beschrieben ein Markierungsgas ab.
Eine weitere Möglichkeit besteht darin, dass das Markierungsgas 13 aus einem Markierungsgasbehälter 14 in das Kühlanlagensystem geleitet wird. Das Markierungsgas 13 gelangt in diesem Fall durch ein Ventil in das Kühlsystem. Das Ventil wird geöffnet, wenn infolge der detektierten Feuchtigkeit ein Signal abgegeben wird. Als Ventil kann vorteilhaft ein elektrisch betätigtes Ventil oder ein Schmelzventil verwendet werden.

### BEZUGSZEICHENLISTE

- 1: Kompressor
- 2: Kondensator
- 3: Trockenbehälter
- 4: Expansionsventil
- 5: Verdampfer
- 6: Gebläse
- 7: Trocknergehäuse
- 8: Einströmrohr
- 9: Ausströmöffnung
- 10: Trockenmittel
- 11: Isolierstück
- 12: elektrische Anschlussleitung
- 13: Markierungsgas
- 14: Markierungsgasbehälter
- 15: Trockenmittelgehäuse
- 16: Feuchtefühler
- 17: Gegenelektrode
- 18: Adapter

## Patentansprüche

1. Verfahren zur Erkennung und/oder Ortung von Leckagen an einem gasgefüllten System, wobei Leckstellen mit einem externen Lecksuchgerät erkannt werden, **dadurch gekennzeichnet, dass** in dem System ein hygroskopischer Stoff eingebracht wird, der nach Auftreten einer Leckage durch eindringende Feuchtigkeit seine elektrische Leitfähig stark erhöht und ein elektrisch auswertbares Signal abgibt auf Grund dessen ein selektives Markierungsgas (13) in das System gegeben wird, das an der Leckstelle detektierbar ist.

2. Verfahren nach Anspruch 1, **dadurch gekennzeichnet, dass** in dem hygroskopischen Stoff durch Anlegen einer elektrischen Spannung ein Elektrolysestromfluß erzeugt wird, welcher zur Zersetzung des hygroskopischen Stoffes und zum Ausscheiden des Markierungsgases (13) führt.

3. Verfahren nach Anspruch 1, **dadurch gekennzeichnet, dass** durch Anlegen einer elektrischen Spannung im hygroskopische Stoff ein Stromfluß erzeugt wird, mit dem ein Ventil geöffnet wird, welches ein Markierungsgas (13) aus einem Markierungsgasbehälter (14) in das System strömen lässt.

4. Verfahren nach einem der Ansprüche 2 oder 3, **dadurch gekennzeichnet, dass** als hygroskopischer Stoff Ammoniumcarbonat oder Phosphorpentoxid verwendet wird.

5. Verfahren nach einem der Ansprüche 2 bis 4, **dadurch gekennzeichnet, dass** als Markierungsgas Wasserstoff verwendet wird.

6. Anordnung, insbesondere zur Durchführung des Verfahrens nach einem der Ansprüche 1 bis 5, bei der ein gasgefülltes System mit einem Gassensor überwacht wird, **dadurch gekennzeichnet, dass** sich in dem gasgefüllten System ein Trockenbehälter (3) befindet, das ein hygroskopisches Trockenmittel (10) enthält, welches durch Feuchtigkeit seine elektrische Leitfähig stark erhöht und der Trockenbehälter (3) mit elektrischen Anschlußleitungen (12) verbunden ist und außerhalb des gasgefüllten Systems mindestens ein Gassensor zur Ermittlung der Leckstelle angebracht ist.

7. Anordnung nach Anspruch 6, **dadurch gekennzeichnet, dass** als hygroskopisches Trockenmittel (10) ein Stoff eingesetzt ist, der bei Stromfluss ein Markierungsgas (13) abscheidet.

8. Anordnung nach Anspruch 6, **dadurch gekennzeichnet, dass** das gasgefüllte System mit einem Markierungsgasbehälter (14) verbunden ist, in dem das Markierungsgas (13) aufbewahrt wird, und das Markierungsgas (13) durch ein von einem Stromfluss durch das Trockenmittel (10) geöffnetes Ventil aus dem Markierungsgasbehälter (14) in das System strömt.

9. Anordnung nach Anspruch 8, **dadurch gekennzeichnet, dass** als Ventil ein Schmelzventil verwendet wird.

10. Anordnung nach einem der Ansprüche 6 bis 8, **dadurch gekennzeichnet, dass** im hygroskopischen Trockenmittel (10) Metallelektroden aus verschiedenen Material angeordnet sind, die bei Eintritt von Feuchtigkeit die Elektrolyse ausgelöst und das Markierungsgas abgeschieden wird.

11. Anordnung nach Anspruch 10, **dadurch gekennzeichnet, dass** eine Kupferund eine Zinkelektrode verwendet wird.
